(19) **Europäisches Patentamt**

**European Patent Office**

**Office européen des brevets**

(11) **EP 1 141 734 B1**

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(21) Anmeldenummer: **99964424.8**

(22) Anmeldetag: **10.12.1999**

(51) Int Cl.⁷: $G01R\ 31/00$

(86) Internationale Anmeldenummer:
**PCT/DE99/03955**

(87) Internationale Veröffentlichungsnummer:
**WO 00/036426 (22.06.2000 Gazette 2000/25)**

(54) **VERFAHREN UND ANORDNUNG ZUR VORHERSAGE VON MESSDATEN ANHAND VORGEGEBENER MESSDATEN**

METHOD AND ARRANGEMENT FOR PREDICTING MEASUREMENT DATA BY MEANS OF GIVEN MEASUREMENT DATA

PROCEDE ET DISPOSITIF POUR PREVOIR DES DONNEES DE MESURE SUR LA BASE DE DONNEES DE MESURE PREDETERMINEES

(84) Benannte Vertragsstaaten:
**DE FR GB**

(30) Priorität: **16.12.1998 DE 19858093**

(43) Veröffentlichungstag der Anmeldung:
**10.10.2001 Patentblatt 2001/41**

(73) Patentinhaber: **SIEMENS AKTIENGESELLSCHAFT 80333 München (DE)**

(72) Erfinder:
- **ACKERMANN, Thomas D-91074 Herzogenaurach (DE)**
- **GREINER, Michael D-85221 Dachau (DE)**
- **LIGGESMEYER, Peter D-85540 Haar (DE)**
- **MÄCKEL, Oliver D-81929 München (DE)**

(56) Entgegenhaltungen:
**EP-A- 0 786 725     DE-C- 19 610 847**

- **YAMADA S; OSAKI S: "Software Reliability Growth Modeling: Models and Applications" IEEE TRANSACTIONS ON SOFTWARE ENGINEERING, Bd. SE-11, Nr. 12, Dezember 1985 (1985-12), Seiten 1431-1437, XP000915448**
- **EHRLICH W K ET AL: "APPLICATION OF SOFTWARE RELIABILITY MODELING TO PRODUCT QUALITY AND TEST PROCESS" PROCEEDINGS OF THE INTERNATIONAL CONFERENCE ON SOFTWARE ENGINEERING, US, LOS ALAMITOS, IEEE COMP. SOC. PRESS, Bd. CONF. 12, 1990, Seiten 108-116, XP000293771 ISBN: 0-8186-2026-9**
- **ANONYMOUS: "Stochastic Simulator of Software Development Process. February 1978." IBM TECHNICAL DISCLOSURE BULLETIN, Bd. 20, Nr. 9, 1. Februar 1978 (1978-02-01), Seiten 3691-3692, XP002142220 New York, US**

EP 1 141 734 B1

**Beschreibung**

Die Erfindung betrifft ein Verfahren und eine Anordnung zur Vorhersage von Meßdaten anhand vorgegebener Meßdaten.

Ein technisches System wirft oftmals die Frage nach einer Prognose anhand bekannter (Meß-)Daten auf, insbesondere im Hinblick auf eine Fehleranfälligkeit oder eine Kostenabschätzung.

Übernimmt eine solche Prognose ein Experte, so ist diese Prognose zumeist fehlerbehaftet. Eine exakte Bestimmung kann der Experte, zumindest für ein hinreichend komplexes System, nicht vornehmen.

Ein stochastischer Punktprozeß, insbesondere ein Poisson-Prozeß, ist aus [1] bekannt.

Aus [3] ist ein in Software vorliegendes Vorhersagetool bekannt, anhand dessen die Analyse von Importierungsfehlern im Rahmen des Softwareentwicklungsprozesses ermöglicht wird.

In [4] ist ein Verfahren zu Klassifikation einer messbaren Zeitreihe beschrieben, indem bedingte Entropien bestimmt werden und anhand eines Informationsflusses der bedingten Entropien die Klassifikation erfolgt.

Weiterhin sind in [5] Modelle und Anwendungsbeispiele zur Modellierung der Zuverlässigkeitssteigerung von Software angegeben.

Schließlich benennt [6] eine Anwendung der Modellierung von Softwarezuverlässigkeit im Hinblick auf Produktqualität und Testprozeß.

Die **Aufgabe** der Erfindung besteht darin, automatisch eine Vorhersage (Prognose) von Meßdaten anhand vorgegebener Meßdaten zu ermöglichen.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Vorhersage von Meßdaten innerhalb eines Wertebereichs, der durch die prognostizierten Meßdaten bestimmt ist.

Eine Weiterbildung besteht darin, daß ein Konfidenzintervall für die Vorhersage von Meßdaten bestimmt wird, indem die a% kleinsten und die b% größten prognostizierten Meßdaten eliminiert werden. Insbesondere kann a% = b% sein. Beispielsweise kann somit ein 95%-iges Konfidenzintervall bestimmt werden, indem die 2,5% kleinsten und die 2,5% größten prognostizierten Meßdaten unberücksichtigt bleiben.

Ein Vorteil besteht darin, daß von einem vorgegebenen Zeitpunkt aus die Meßdaten mit einer in einem Konfidenzintervall liegenden Genauigkeit vorhergesagt (prognostiziert) werden können. Dies ermöglicht bereits in einem frühen Stadium die Erkennung beispielsweise einer Erfüllbarkeit bzw. Nichterfüllbarkeit einer mit den Meßdaten verbundenen Aufgabe, so daß daran geeignete Maßnahmen geknüpft werden können, um einer prognostizierten Nichterfüllung entgegenzuwirken. Dies ist insbesondere von Bedeutung bei einem komplexen System, z.B. einem Softwareentwicklungsprozeß, bei dem innerhalb einer späteren Testphase aufzeigbar ist, inwieweit eine Zeitplanung bis zur Fertigstellung der Software eingehalten werden kann. Umso wichtiger ist es, hierbei frühzeitig einer deutlichen Verzögerung, beispielsweise in einer Integrationstest-Phase, entgegenwirken zu können. Dies wirkt sich zum einen auf die Erfüllbarkeit innerhalb der gesetzten Frist (Zeitrahmen), zum anderen direkt auf die Kosten aus, da eine Nichterfüllung in der vereinbarten Zeit regelmäßig zusätzliche Kosten verursacht.

Eine Ausgestaltung besteht darin, daß der stochastische Prozeß ein nichthomogener Poisson-Prozeß ist.

Insbesondere ist es eine Ausgestaltung, daß die Meßdaten Anzahlen von Fehlern sind. Dies entspricht beispielsweise einer Softwareentwicklung, bei der abhängig von in einer Testphase gemessenen Fehlern ein Reifegrad derselben dokumentiert wird. Abhängig von diesem Reifegrad resultiert direkt die Fertigstellung, d.h. solange nicht ein Großteil der Fehler aus der Software entfernt wurde, kann diese nicht an Kunden ausgeliefert werden. Dies drückt sich insbesondere durch Aufwand (beim Testen und Korrigieren der Fehler) und Kosten (für die Zeitverzögerung bei der Auslieferung) aus.

Zur Lösung der Aufgabe wird auch ein Verfahren zur Vorhersage von Meßdaten anhand vorgegebener Meßdaten angegeben, bei dem ein stochastischer Prozeß an die vorgegebenen Meßdaten angepaßt wird. Es wird ein Intervall ermittelt, indem anhand des stochastischen Prozesses gewonnene Wahrscheinlichkeitswerte der Größe nach um einen Erwartungswert sortiert werden. Die Vorhersage von Meßdaten erfolgt durch Orientierung an dem Intervall, insbesondere an den Wahrscheinlichkeitswerten innerhalb des Intervalls.

Eine Weiterbildung besteht darin, daß die anhand des stochastischen Prozesses gewonnenen Wahrscheinlichkeitswerte der Größe nach symmetrisch um den Erwartungswert sortiert werden. Damit ist insbesondere gemeint, daß der größte Wahrscheinlichkeitswert die Mitte des Intervalls, also den Erwartungswert kennzeichnet, wohingegen der nächst größere Wahrscheinlichkeitswert rechts- bzw. linksseitig des Erwartungswertes angeordnet wird. Der nachfolgend nächst höhere Wahrscheinlichkeitswert wird gegenüber auf der anderen Seite des Erwartungswertes symmetrisch angeordnet.

Auf diesem Wege erhält man analytisch (konstruktiv) ein Intervall, das wiederum durch seine Breite angibt, welche Wahrscheinlichkeitswerte für die Vorhersage der Meßdaten eine Rolle spielen.

Insbesondere ist es eine Ausgestaltung, daß die Breite des Intervalls bestimmt wird, indem diejenigen Wahrscheinlichkeitswerte unberücksichtigt bleiben, die unterhalb einer vorgegebenen Schranke liegen.

Dadurch ergibt sich ein Intervall (Konfidenzintervall), welches durch die Schranke eine bestimmte Breite aufweist. Diese Breite entspricht der Sicherheit der Vorhersage von Meßdaten.

Geht man davon aus, daß der stochastische Prozeß ein nichthomogener Poisson-Prozeß ist, so wird insbesondere auf einer Zeitachse t durch den nichthomogenen Poisson-Prozeß eine Schrittweite bestimmt, die angibt, wann der nächste Fehler auftritt. Durch die Eigenschaft der Gedächtnislosigkeit des nichthomogenen Poisson-Prozesses wird von jedem zu einem bestimmten Zeitpunkt aufgetretenen Fehler "gedächtnislos" nach einem für den nächsten Fehler kennzeichnenden Zeitpunkt gesucht.

Auch wird zur Lösung der Aufgabe eine Anordnung zur Vorhersage von Meßdaten anhand vorgegebener Meßdaten angegeben, bei der eine Prozessoreinheit vorgesehen ist, die derart eingerichtet ist, daß

    a) ein stochastischer Prozeß an die vorgegebenen Meßdaten anpaßbar ist;
    b) ab einem vorgegebenen Zeitpunkt Simulationsläufe bis zu einem Endzeitpunkt durchführbar sind;
    c) für jeden Simulationslauf die prognostizierten Meßdaten ermittelbar sind;
    d) für den Endzeitpunkt die Vorhersage von Meßdaten innerhalb eines Wertebereichs, der durch die prognostizierten Meßdaten bestimmt ist, vorhersagbar ist.

Ferner wird zur Lösung der Aufgabe eine Anordnung zur Vorhersage von Meßdaten anhand vorgegebener Meßdaten angegeben, bei der eine Prozessoreinheit vorgesehen ist, die derart eingerichtet ist, daß

    a) ein stochastischer Prozeß an die vorgegebenen Meßdaten anpaßbar ist;
    b) ein Intervall ermittelbar ist, indem anhand des stochastischen Prozesses gewonnene Wahrscheinlichkeitswerte der Größe nach um einen Erwartungswert sortiert werden;
    c) die Vorhersage von Meßdaten innerhalb der Grenzen des Intervalls erfolgt.

Die Anordnungen sind insbesondere geeignet zur Durchführung der erfindungsgemäßen Verfahren oder der vorstehend erläuterten Weiterbildungen.

Ausführungsbeispiele der Erfindung werden nachfolgend anhand der Zeichnung dargestellt und erläutert.

Es zeigen

Fig.1    eine Skizze, die eine akkumulierte Fehleranzahl über einem Testzeitraum darstellt;

Fig.2    eine Skizze, die überlagerte Konfidenzintervalle für verschiedene Prozeßmodelle darstellt;

Fig.3    ein Flußdiagramm mit Schritten eines Verfahrens zur Vorhersage von Meßdaten anhand vorgegebener Meßdaten;

Fig.4    ein weiteres Flußdiagramm mit Schritten eines Verfahrens zur Vorhersage von Meßdaten anhand vorgegebener Meßdaten;

Fig.5    eine Prozessoreinheit;

Um eine zu erwartende Fehleranzahl in einem technischen Prozeß, beispielsweise in einem Software-Entwicklungsprozeß, prognostizieren zu können, werden nichthomogene Poisson-Prozesse (NHPP) kalibriert, d.h. an Meßdaten, z.B. das Auftreten der Fehler über die Zeit, angepaßt. Mit

$$\{N(t)\}_{t \in \mathbb{R}^+} \tag{1}$$

wird ein zu dem stochastischen Punktprozeß (nichthomogenen Poisson-Prozeß) assoziierter Zählprozeß und mit einem Zeitpunkt $t_0$ ein Ende eines Testzeitraumes, also ein Zeitpunkt an dem die vorgegebenen Daten enden, bezeichnet. Es werden die stochastischen Prozesse

$$\{U(t)\}_{t \in \mathbb{R}^+} \tag{2}$$

und

$$\{O(t)\}_{t \in R^+} \tag{3}$$

gesucht mit

$$P\Big(U(t) \le N(t) - N(t_0) \le O(t) \,\Big|\, N(t_0) = n_0\Big) \ge \alpha \tag{4},$$

für alle Zeitpunkte $t > t_0$ und gegebene Werte $\alpha \in (0,1)$ (Konfidenzniveau) sowie $n_0 \in \mathbf{N}$. Nachfolgend werden insbesondere die Zuwächse des stochastischen Zählprozesse bezogen auf den Zeitpunkt $t_0$ betrachtet.

Für den hier vorliegenden Fall, in dem Gleichung (1) einen nichthomogenen Poisson-Prozeß bezeichnet, gilt (vgl. [1])

$$P\Big(N(t_1) - N(t_0) = \ell\Big) = \exp\Big(-\big[i(t_1) - i(t_0)\big]\Big) \cdot \frac{\big[i(t_1) - i(t_0)\big]^\ell}{\ell!} \tag{5}$$

für

$$0 \le t_0 < t_1 < \infty, \ \ell \in N_0 \tag{6}$$

und eine Intensität (englisch: intensity, mean measure, mean value function)

$$i\colon R^+ \to R^+, t \mapsto i(t) := EN(t) \tag{7}.$$

Da gemäß der Eigenschaft des Poisson-Prozesses die Zuwächse (hier: Fehlerzuwächse) unabhängig von vorangegangenen Zuwächsen sind, kann Gleichung (5) für Zeitpunkte $t > t_0$ zur Bestimmung eines (möglichst kleinen) Intervalls

$$[g_u, g_o] \equiv [g_u(t), g_o(t) \subset N_0 \tag{8}$$

vereinfacht werden zu

$$\sum_{\ell = g_u}^{g_o} P\Big(N(t) - N(t_0) = \ell\Big) \ge \alpha \tag{9}.$$

Aufgrund der Unimodalität der Poisson-Zähldichte kann ein Intervall $[g_u, g_o]$ wie folgt ermittelt werden:

Schritt 1: sortiere die Elementarwahrscheinlichkeiten

$$p\ell := P\Big(N(t) - N(t_0) = \ell\Big), \ \ell \in \mathbf{N}_0$$

in absteigender Reihenfolge und bezeichne die derart sortierten Werte mit

$$P(0), P(1), \ldots \quad (d.h. \ \{p_0, p_1, \ldots\} = \{P(0), P(1), \ldots\} \ und$$
$$P(0) \geq P(1) \geq \ldots);$$

Schritt 2:   bestimme

$$\ell_{min} := min\left\{\ell \in \mathbf{N}_0 \ \middle| \ \sum_{i=0}^{\ell} P(i) \geq \alpha\right\};$$

Schritt 3:   bestimme eine Indexmenge

$$I := \left\{i_0, \ldots, i_{\ell_{min}}\right\} \subset \mathbf{N}_0$$

mit

$$\left\{p_{i_0}, \ldots, p_{i_{\ell_{min}}}\right\} = \left\{P(0), \ldots, P\left(\ell_{min}\right)\right\};$$

Schritt 4:

$$setze \ g_u := \min_{i \in I}\{i\} \ und \ g_O := \max_{i \in I}\{i\}.$$

Das Intervall aus Gleichung (8) wird auch als Prognose-Intervall bezeichnet.

**Stochastische Simulation (zweiter Ansatz)**

Das beschriebene Konfidenzintervall kann simulativ bestimmt werden durch folgende Schritte:

Schritt 1:   starte am Zeitpunkt $t_0$ der letzten Fehlermeldung m ∈ **N** voneinander unabhängige Simulationsläufe, die auf dem gewählten Prozeßmodell basieren;

Schritt 2:   beende einen Simulationslauf, sobald der gewünschte Endzeitpunkt $t_e$ erreicht ist;

Schritt 3:   wiederhole Schritt 2 solange bis alle Simulationsläufe beendet sind;

Schritt 4:   sortiere die Anzahlen $\hat{N}_i(t_e)$ der im i-ten Simulationslauf generierten Fehler in dem Zeitraum $(t_0, t_e]$, i=1,..., m, in absteigender Reihenfolge und bezeichne die derart sortierten Werte mit $N_{(1)}(t_e),..., N_{(m)}(te)$ ;

Schritt 5:   setze

$$\hat{g}_u := \hat{N}_{(\lfloor m \cdot \alpha/2 \rfloor)}(t_e)$$

und

$$\hat{g}_o := \hat{N}_{(\ulcorner m \cdot (1-\alpha / 2) \urcorner)}(t_e),$$

d.h. eliminiere die $(100 \cdot (1 - \alpha) / 2)$% kleinsten und größten Werte.

Daraus resultiert unmittelbar das Konfidenzintervall.

Jeder einzelne Simulationslauf basiert auf einem Simulationsalgorithmus, der aus (vgl. [2]) bekannt ist: Simulative Erzeugung von Zwischenankunftszeiten eines nichthomogenen Poisson-Prozesses:

Schritt 1: Setze $\bar{\lambda} := \frac{\sup}{t \geq t_s} \{\lambda,(t)\}$, wobei gilt:

$$\lambda(t) := \left. \frac{di}{dt} \right|_t \qquad (10).$$

Schritt 2: erzeuge eine mit dem Parameter $\bar{\lambda}$ exponentialverteilte (Pseudo-)Zufallsvariable X, d.h. $X := -\log(U)/\bar{\lambda}$, wobei U auf (0,1) gleichverteilt ist.

Schritt 3: erzeuge eine auf (0,1) gleichverteilte Zufallsvariable U.

Schritt 4: falls $U \leq \lambda(t_s + X) / \bar{\lambda}$, dann setze $t^* := t_s + X$; andernfalls setze $t_s := t_s + X$ und gehe zu Schritt 1.

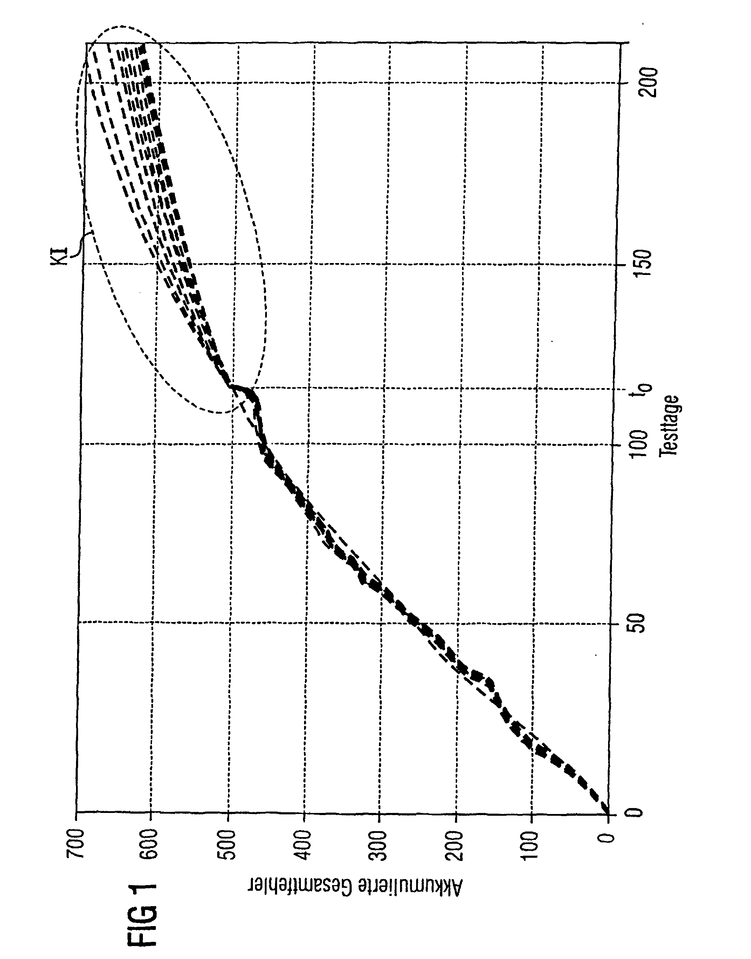

**Fig.1** zeigt beispielhaft eine Skizze, die eine akkumulierte Fehleranzahl über einem vorgegebenen Testzeitraum darstellt. Ab einem Zeitpunkt $t_0$ zeigt sich ein Vorhersageintervall für alle Zeitpunkte $t_0 + x$.

Allgemein ergibt sich die Ableitung der Intensität i gemäß Gleichung (10) zu $\lambda$. Beispielsweise ergibt sich:

a)

$$\lambda(t) = a \cdot b \cdot c \cdot \exp\left(- bt^c\right) \cdot t^{c-1}$$

($\lambda,(t)$ ist für $c \leq 1$ streng monoton fallend, für $c > 1$ unimodal mit einem eindeutigen Maximum an einer Stelle

$$t_{max} = \sqrt[c]{\frac{c - 1}{bc}}).$$

b) $\bar{\lambda}$ ergibt sich nach den obigen Überlegungen zu

$$\bar{\lambda} = \begin{cases} \lambda(t_s), & (c \leq 1) \vee (t_s \geq t_{max}) \\ \lambda(t_{max}), & \text{sonst.} \end{cases}$$

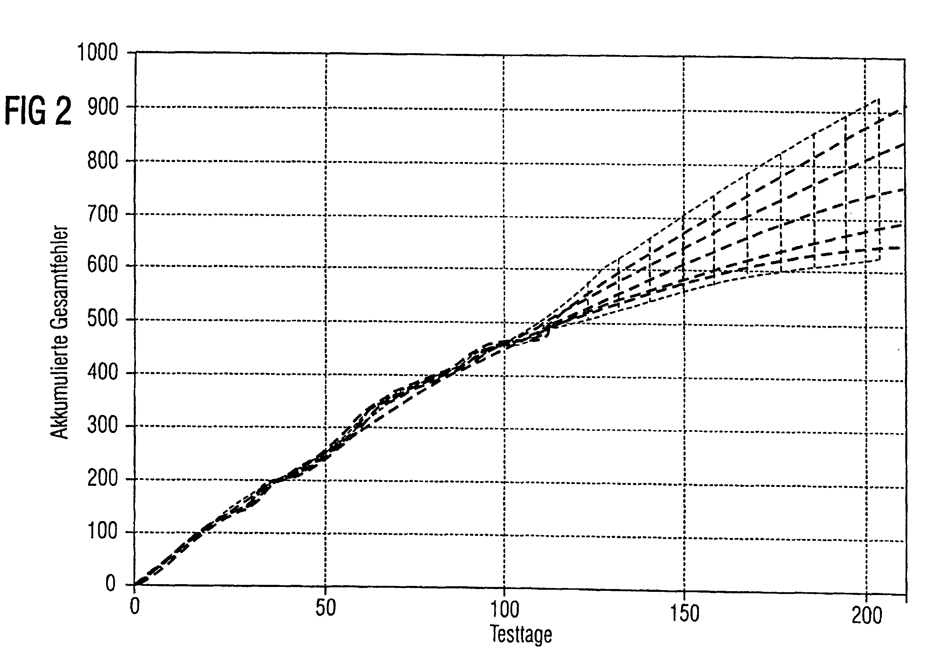

In **Fig.2** ist eine Skizze gezeigt, die überlagerte Konfidenzintervalle darstellt. Insbesondere wird dadurch ersichtlich, daß eine etwaige Prognose umso breiter streut, je weiter sie in die Zukunft reicht. Insbesondere können durch verschiedene Prozeßmodelle berechnete Konfidenzintervalle auf die in Fig.2 dargestellte Art visualisiert werden.

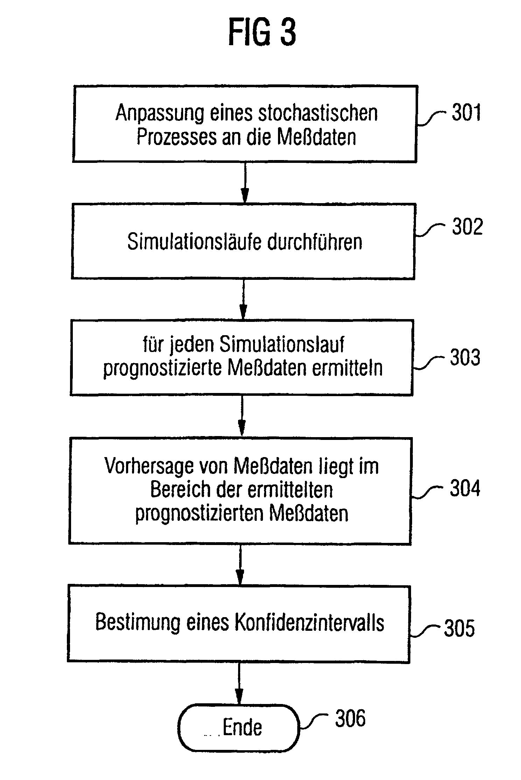

In **Fig.3** ist ein Flußdiagramm mit Schritten eines Verfahrens zur Vorhersage von Meßdaten anhand vorgegebener Meßdaten dargestellt. In einem Schritt 301 wird ein stochastischer Prozeß, insbesondere ein nichthomogener Poisson-Prozeß (als Vertreter für einen stochastischen Zählprozeß) an vorgegebene Meßdaten angepaßt. In einem Schritt 302 werden Simulationsläufe durchgeführt, die ausgehend von dem Zeitpunkt $t_0$ bis zu einem zu prognostizie-

renden Endzeitpunkt $t_e$ laufen. Für jeden Simulationslauf werden in einem Schritt 303 prognostizierte Meßdaten bestimmt und eine Vorhersage von Meßdaten auf einen Bereich eingeschränkt, der von den durch die Simulationsläufe bestimmten Meßdaten abgedeckt wird (siehe Schritt 304). In einem Schritt 305 wird ein Konfidenzintervall bestimmt, indem jeweils ein vorgegebener Teil größter und kleinster prognostizierter Meßdaten unberücksichtigt bleibt (dies entspricht besagtem Bereich). In einem Schritt 306 wird das Verfahren beendet.

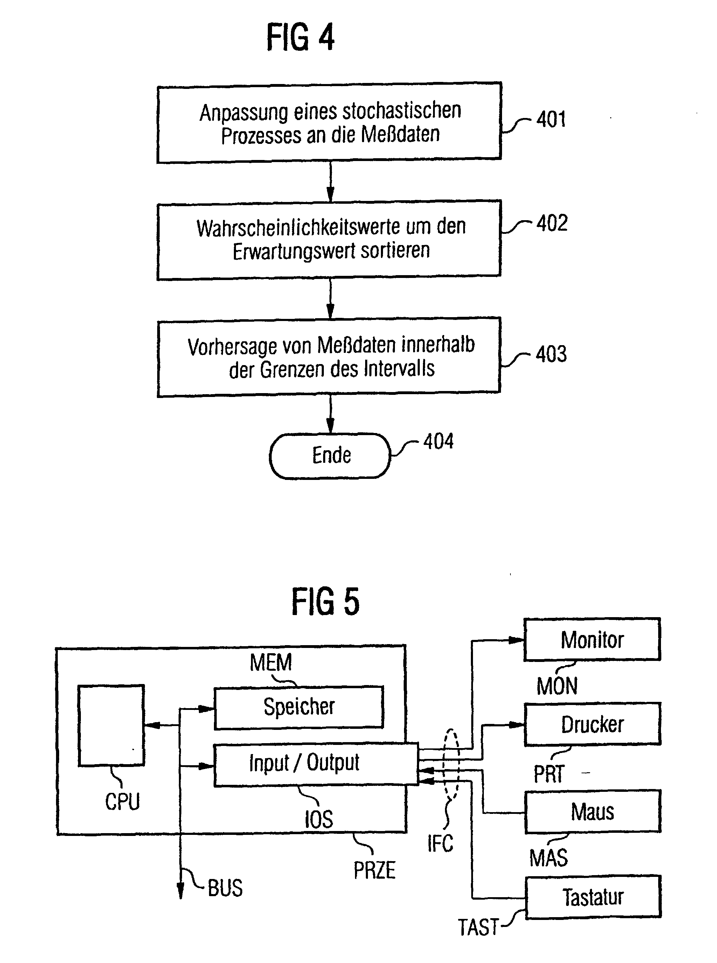

**Fig.4** zeigt ein weiteres Flußdiagramm mit Schritten eines Verfahrens zur Vorhersage von Meßdaten anhand vorgegebener Meßdaten. Dazu wird in einem Schritt 401 eine Anpassung eines stochastischen Prozesses, insbesondere eines nichthomogenen Poisson-Prozesses an die vorgegebenen Meßdaten durchgeführt. Anhand des stochastischen Prozesses werden Wahrscheinlichkeitswerte bestimmt, die der Größe nach um einen Erwartungswert sortiert werden (vergleiche Schritt 402). Durch diesen Sortiervorgang wird ein Intervall, hier ein Konfidenzintervall, bestimmt. Die Breite des Konfidenzintervalls ergibt sich durch Vergleich der akkumulierten Wahrscheinlichkeiten mit einer vorgegebenen Schwelle. Durch das Konfidenzintervall ist, wie oben erklärt wurde, eine Verteilung bzw. Unschärfe von einem Zeitpunkt $t_0$ in die Zukunft gegeben, die eine Abschätzung der Meßdaten in der Zukunft ermöglicht (siehe Schritt 403). In einem Schritt 404 wird das Verfahren beendet.

In **Fig.5** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Nachfolgend werden ein Algorithmus zur Bestimmung von Konfidenzintervallen für Prognosen und ein Algorithmus zur simulativen Bestimmung von Konfidenzintervallen für Prognosen in der Notation der Programmiersprache C angegeben.

--

**Programm 1:**

```
/* Bestimmung von Konfidenzintervallen für Prognosen      */
/* basierend auf dem verallgemeinerten Goel-Okomoto-Modell */
#include <stdlib.h>
#include <math.h>
#include <stdio.h>

#define true   1
#define false -1

double mv_genGO(double,double,double,double); double poisson(double,long); void ki_nhpp();
int main(argc,argv)
int argc;
char *argv[];
{
double a,b,c,bt,st,kn;
long low,upp,lauf;

if (argc<7) {
printf("\n\nZuwenig Argumente! \n\n");
printf("Aufruf: %s <Par1> <Par2> <Par3> <Startzeit> <Endzeit>",
"<KNiveau>\n\n", argv[0]); return 1;
  }

a = atof(argv[1]);
b = atof(argv[2]);
c = atof(argv[3]);
bt= atof(argv[4]);
st= atof(argv[5]);
kn= atof(argv[6]);

for (lauf=1;lauf< ;lauf++) {
ki_nhpp(mv_genGO,a,b,c,bt,bt+lauf*(st-bt)/10.,kn,&low,&upp);
printf("Zeitpunkt: %8.2f    Fehlerintervall: [%d,%d]\n",
bt+lauf*(st-bt)/10., low, upp);
  }
return 0;
}

double mv_genGO(x,a,b,c)
double x,a,b,c;
{ return( a*(1.0-exp(-b*pow(x,c))) ); }

double poisson(lambda,wert)
double lambda;
long wert;
{
long i;
double itval,hv;

if (lambda<600) {
itval = exp(-lambda);
for (i=wert;i>=1;i--) { itval *= lambda/(double)i; }
  }
```

```
else {
hv = exp(-lambda/(double)wert);
itval = 1.0;
for (i=wert;i>=1;i--) { itval *= lambda/(double)i*hv; }
   }
return ( itval );
}


void ki_nhpp(mv_nhpp, par1_nhpp, par2_nhpp, par3_nhpp,
start_time, stop_time, k_niveau, lower, upper) double mv_nhpp(double,double,double,double);
     double par1_nhpp, par2_nhpp, par3_nhpp, start_time, stop_time, k_niveau; long *lower, *upper;
{
long lauf;
int lborder,mod_low,mod_upp;
double sum,tmp_mv, val_l, val_u;

tmp_mv = mv_nhpp(stop_time,par1_nhpp,par2_nhpp,par3_nhpp) -
mv_nhpp(start_time,par1_nhpp,par2_nhpp,par3_nhpp); lauf = (long)tmp_mv;
*lower = lauf-1;
*upper = lauf+1; mod_low= false; mod_upp= false; sum    = poisson(tmp_mv,lauf); val_l =
     poisson(tmp_mv,*lower); val_u = poisson(tmp_mv,*upper);
while (sum<k_niveau) {
if (val_l<val_u) {
sum += val_u;
(*upper)++;
lborder = false;
mod_upp = true;
val_u = poisson(tmp_mv,*upper);
   }
else {
sum += val_l;
(*lower)--;
lborder = true;
mod_low = true;
val_l = poisson(tmp_mv,*lower);
   }
 }

If (lborder == true) { (*lower)++; }
else             { (*upper)--; }

if (mod_low == false) { (*lower)++; }
if (mod_upp == false) { (*upper)--; }

return;
}
```

**Programm 2:**

```
/* Simulative Bestimmung von Konfidenzintervallen für Prognosen */
/* basierend auf dem verallgemeinerten Goel-Okomoto-Modell    */
#include <stdlib.h>
#include <math.h>
#include <time.h>
#include <stdio.h>
#include <values.h>

#define true   1
#define false -1

double drand48(void);
void srand48(long);

double sim_exp(double); double lambda_genGO(double,double,double,double); void sim_nhpp();
int main(argc,argv)
int argc;
char *argv[];
{
time_t t; double a,b,c,bt,st,pnt[1000000],check_time[12]; long lauf,no_pnt,seed_run; int clauf;
FILE *datei;
if (argc<6) {
printf("\n\nZuwenig Argumente! \n\n");
printf("Aufruf: %s <Par1> <Par2> <Par3> <Startzeit> <Endzeit>\n\n",
argv[0]); return 1;
  }

datei = fopen("sim.seed","r");
if (datei==NULL) {
seed_run = 1;
  }
else {
fscanf(datei,"%6d",&seed_run); fclose(datei); seed_run++;
  }

datei = fopen("sim.seed","w+");
fprintf(datei, "%6d\n", seed_run );
fclose(datei);

time (&t) ;              /* Initialisierung des    */
t += seed_run*100 ;        /* Zufallszahlengenerators */
srand48 ((unsigned long) t) ; /* mit Hilfe der Systemzeit */
a = atof(argv[1]);
b = atof(argv[2]);
c = atof(argv[3]);
bt= atof(argv[4]);
st= atof(argv[5]);

sim_nhpp(lambda_genGO,a,b,c,bt,st,&pnt,&no_pnt);
for (lauf=1;lauf<=no_pnt;lauf++) {
printf("%15.7f %10d \n", pnt[lauf], lauf);
  }
```

```
datei = fopen("ki.tmp","a");
for (lauf=1;lauf< ;lauf++) {
check_time[lauf] = bt+lauf*(st-bt)/10.;
    }
check_time[11] = pnt[no_pnt]+1; /* größer als die größte
simulierte Zeit */
clauf = 1;
for (lauf=1;lauf<=no_pnt;lauf++) {
while (pnt[lauf]>=check_time[clauf]) { fprintf(datei, "%8.2f %6d ", check_time[clauf], lauf-1); clauf++;
    }
    }

if (pnt[no_pnt] <check_time[10]) {
for (lauf=clauf;lauf< ;lauf++) { fprintf(datei, "%8.2f %6d ", check_time[lauf], no_pnt);
    }
    }

fprintf(datei, "\n");
fclose(datei);

return 0;
}

double sim_exp(lambda)
double lambda;
{ return( -log(drand48())/lambda ); }

double lambda_genGO(x,a,b,c)
double x,a,b,c;
{ return( a*b*c*pow(x,c-1)*exp(-b*pow(x,c)) ); }

void sim_nhpp(lambda_nhpp, par1_nhpp, par2_nhpp, par3_nhpp,
start_time, stop_time, path, no_points) double lambda_nhpp(double,double,double,double); double
    par1_nhpp, par2_nhpp, par3_nhpp, start_time, stop_time; double path[]; long *no_points;
{
double sim_time,x,u,x_bar,lambda_bar;
*no_points=0;
sim_time = start_time;

do {
if (par3_nhpp<=1) { lambda_bar = lambda_nhpp(sim_time,par1_nhpp,par2_nhpp,par3_nhpp);
    }
else {
x_bar = pow((par3_nhpp-1.0)/par2_nhpp/par3_nhpp,1.0/par3_nhpp);
if (sim_time>=x_bar) {
lambda_bar = lambda_nhpp(sim_time,par1_nhpp,par2_nhpp,par3_nhpp);
    }
else {
lambda_bar = lambda_nhpp(x_bar,par1_nhpp,par2_nhpp,par3_nhpp);
    }
    }

x = sim_exp(lambda_bar);
u = drand48();
```

```
      if (u<=lambda_nhpp(sim_time+x,par1_nhpp,par2_nhpp,par3_nhpp)/lambda_bar) { (*no_points)++;
         path[*no_points]=sim_time+x;
         }
   sim_time+=x;
    }
   while (sim_time<=stop_time);
   return;
   }
```

**Programm 3:**

```
/* Bestimmung der Konfidenzintervalle aus den Simulationsdaten */
/* (die Simulationsdaten werden in aufsteigender Reihenfolge sortiert)    */
#include <stdlib.h>
#include <math.h>
#include <stdio.h>

int qsort_icmp(int*,int*);
int qsort_icmp(x,y)
int *x, *y;
{
if (*x<*y)     { return ( -1 ); }
else if (*x==*y) { return (  0 ); }
else           { return (  1 ); }
}


int main(argc,argv)
int argc;
char *argv[];
{
int pnt[11][100000];
int qs[100000];
char *dname;
int frac,i;
long lauf,lower_bound,upper_bound;
long l,no_pnt,seed_run;
double ctime[11],x;
FILE *datei;


if (argc<3) {
printf("\n\nZuwenig Argumente! \n\n"); printf("Aufruf: %s <Dateiname> <Konfidenzniveau (in
    %%)>\n\n", argv[0]); return 1;
  }

dname = argv[1];
frac  = 100-atoi(argv[2]);
lauf = 0;

datei = fopen(dname,"r");
if (datei==NULL) { return 1; }
else {
while (!feof(datei)) {
lauf++;
for (i=1;i<=9;i++) {
fscanf(datei,"%8lf %6d ", &ctime[i],  &pnt[i][lauf]);
    }
fscanf(datei,"%8lf %6d \n", &ctime[10],  &pnt[10][lauf]);
  }
fclose(datei);
  }

lower_bound = (long)floor(lauf*frac/200.); upper_bound = (long)ceil(lauf*(200.-frac)/200.);
if (lower_bound<1) {lower_bound = 1;}
```

13

EP 1 141 734 B1

```
printf("\n\n%2d%%-Sicherheitsbereich bei %d Simulationsläufen\n\n",
100-frac,lauf);
for (i=1;i< ;i++) {
for (l=1;l<=lauf;l++) {
qs[l] = pnt[i][l];
    }

qsort(&qs[1], lauf, sizeof(int), &qsort_icmp);
printf("Zeitpunkt: %8.2f    Fehlerintervall: [%d,%d]\n",
ctime[i], qs[lower_bound], qs[upper_bound]);
  }

return 0 ;
}
```

Literaturverzeichnis:

[1] Sidney I. Resnick: "Adventures in Stochastic Processes", Birkhäuser Boston, 1992, ISBN 3-7643-3591-2, pp. 303-317.

[2] Brately et al., 1987

[3] EP-A-0 786 725

[4] DE-C-196 10 847

[5] Yamada S, Osaki S: "Software Reliability Growth Modeling: Models and Applications", IEEE Trans. on Software Eng., Vol.SE-11, No.12, Dec.1985 (1985-12), pages 1431-1437, XP000915448.

[6] Ehrlich W K et al.: "Application of Software reliability modeling to product quality and test process", Proc. of the International Conference on Software Eng., US, Los Alamitos, IEEE Comp. Soc. Press, Vol.Conf.12, 1990, pages 108-116, XP000293771, ISBN 0-8186-2026-9.

**Patentansprüche**

1. Verfahren zur Vorhersage von Meßdaten bis zu einem Endzeitpunkt anhand vorgegebener Meßdaten,

   a) bei dem ein stochastischer Prozeß an die vorgegebenen Meßdaten angepaßt wird;
   b) bei dem ab einem vorgegebenen Zeitpunkt Simulationsläufe des stochastischen Prozesses bis zu dem Endzeitpunkt durchgeführt werden;
   c) bei dem für jeden Simulationslauf die prognostizierten Meßdaten bestimmt werden;
   d) bei dem die Vorhersage von Meßdaten durch Angabe eines Wertebereichs, der durch die prognostizierten Meßdaten bestimmt ist, erfolgt.

2. Verfahren nach Anspruch 1,
   bei dem ein Konfidenzintervall für die Vorhersage von Meßdaten bestimmt wird, indem die a% kleinsten und die b% größten prognostizierten Meßdaten eliminiert werden.

3. Verfahren nach Anspruch 2,
   bei dem a% gleich b% ist.

4. Verfahren nach einem der vorhergehenden Ansprüche,

bei dem der stochastische Prozeß ein nichthomogener Poisson-Prozeß ist.

**5.** Verfahren nach einem der vorhergehenden Ansprüche,
bei dem die Meßdaten Anzahlen von Fehlern sind.

**6.** Verfahren zur Vorhersage von Meßdaten anhand vorgegebener Meßdaten,

a) bei dem ein stochastischer Prozeß an die vorgegebenen Meßdaten angepaßt wird;
b) bei dem ein Intervall ermittelt wird, indem anhand des stochastischen Prozesses gewonnene Wahrscheinlichkeitswerte der Größe nach um einen Erwartungswert sortiert werden;
c) bei dem die Vorhersage von Meßdaten innerhalb der Grenzen des Intervalls erfolgt.

**7.** Verfahren nach Anspruch 6,
bei dem die anhand des stochastischen Prozesses gewonnenen Wahrscheinlichkeitswerte der Größe nach symmetrisch um den Erwartungswert sortiert werden.

**8.** Anordnung zur Vorhersage von Meßdaten bis zu einem Endzeitpunkt anhand vorgegebener Meßdaten,
bei der eine Prozessoreinheit vorgesehen ist, die derart eingerichtet ist, daß

a) ein stochastischer Prozeß an die vorgegebenen Meßdaten anpaßbar ist;
b) ab einem vorgegebenen Zeitpunkt Simulationsläufe des stochastischen Prozesses bis zu dem Endzeitpunkt durchführbar sind;
c) für jeden Simulationslauf die prognostizierten Meßdaten ermittelbar sind;
d) die Vorhersage von Meßdaten durch Angabe eines Wertebereichs, der durch die prognostizierten Meßdaten bestimmt ist, erfolgt.

**9.** Anordnung zur Vorhersage von Meßdaten anhand vorgegebener Meßdaten,
bei der eine Prozessoreinheit vorgesehen ist, die derart eingerichtet ist, daß

a) ein stochastischer Prozeß an die vorgegebenen Meßdaten anpaßbar ist;
b) ein Intervall ermittelbar ist, indem anhand des stochastischen Prozesses gewonnene Wahrscheinlichkeitswerte der Größe nach um einen Erwartungswert sortiert werden;
c) die Vorhersage von Meßdaten innerhalb der Grenzen des Intervalls erfolgt.

**Claims**

**1.** Method for predicting measurement data until a final time-point using given measurement data, in which:

a) a stochastic process is matched to the given measurement data;
b) simulation runs of the stochastic process are carried out from a given time-point until the final time-point;
c) the forecast measurement data is determined for each simulation run;
d) measurement data is predicted by stating a range of values, which is determined by the forecast measurement data.

**2.** Method according to Claim 1, in which:

a confidence range is determined for the prediction of measurement data, where the a% lowest and b% highest forecast measurement data are eliminated.

**3.** Method according to Claim 2, in which:

a% and b% are equal.

**4.** Method according to one of the preceding claims, in which:

the stochastic process is a non-homogeneous Poisson process.

**5.** Method according to one of the preceding claims, in which:

the measurement data represents numbers of errors.

**6.** Method for predicting measurement data using given measurement data, in which:

a) a stochastic process is matched to the given measurement data;
b) a range is ascertained, by sorting the probability values generated by the stochastic process according to size, around an expected value;
c) measurement data is predicated within the limits of the range.

**7.** Method according to Claim 6, in which:

the probability values generated by the stochastic process are sorted symmetrically by size around the expected value.

**8.** Arrangement for predicting measurement data until a final time-point using given measurement data, whereby a processor unit is provided and configured in such a way that:

a) a stochastic process can be matched to the given measurement data;
b) simulation runs of the stochastic process can be carried out from a given time-point until the final time-point;
c) the forecast measurement data can be determined for each simulation run;
d) measurement data is predicted by stating a range of values, which is determined by the forecast measurement data.

**9.** Arrangement for predicting measurement data using given measurement data, whereby a processor unit is provided and configured in such a way that:

a) a stochastic process can be matched to the given measurement data;
b) a range can be ascertained by sorting probability values generated by the stochastic process according to size around an expected value;
c) the measurement data is predicted within the limits of the range.

**Revendications**

**1.** Procédé pour prévoir des données de mesure jusqu'à un temps final sur la base de données de mesure prédéterminées, dans lequel

a) un processus stochastique est adapté aux données de mesure prédéterminées;
b) des déroulements de simulation du processus stochastique sont exécutés à partir d'un point temporel prédéterminé et ce, jusqu'à un temps final;
c) les données de mesure prédites sont déterminées pour chaque déroulement de simulation;
d) la prévision de données de mesure se fait par l'indication d'une plage de valeurs définie par les données de mesure prédites.

**2.** Procédé selon la revendication 1, dans lequel un intervalle de confiance est défini, aux fins de la prévision de données de mesure, par l'élimination des a% des données de mesure prédites qui sont les plus petites et des b% des données de mesure prédites qui sont les plus grandes.

**3.** Procédé selon la revendication 2, dans lequel a% est égal à b%.

**4.** Procédé selon l'une des revendications précédentes, dans lequel le processus stochastique est un processus Poisson non homogène.

**5.** Procédé selon l'une des revendications précédentes, dans lequel les données de mesure sont des nombres d'erreurs.

**6.** Procédé pour prévoir des données de mesure sur la base de données de mesure prédéterminées, dans lequel

a) un processus stochastique est adapté aux données de mesure prédéterminées;
b) un intervalle est défini par répartition, autour d'une espérance et selon leur taille, de valeurs de probabilité obtenues à l'aide du processus stochastique;
c) la prévision de données de mesure se fait dans les limites de l'intervalle.

**7.** Procédé selon la revendication 6, dans lequel les valeurs de probabilité obtenues à l'aide du processus stochastique sont réparties, selon leur taille, symétriquement autour de l'espérance.

**8.** Dispositif pour prévoir des données de mesure jusqu'à un temps final sur la base de données de mesure prédéterminées, dans lequel est prévue une unité de processeur configurée de manière telle que

a) un processus stochastique peut être adapté aux données de mesure prédéterminées;
b) des déroulements de simulation du processus stochastique peuvent être exécutés à partir d'un point temporel prédéterminé et ce, jusqu'à un temps final;
c) les données de mesure prédites peuvent être déterminées pour chaque déroulement de simulation;
d) la prévision de données de mesure se fait par l'indication d'une plage de valeurs définie par les données de mesure prédites.

**9.** Dispositif pour prévoir des données de mesure sur la base de données de mesure prédéterminées, dans lequel est prévue une unité de processeur configurée de manière telle que

a) un processus stochastique peut être adapté aux données de mesure prédéterminées;
b) un intervalle peut être défini par répartition, autour d'une espérance et selon leur taille, de valeurs de probabilité obtenues à l'aide du processus stochastique;
c) la prévision de données de mesure se fait dans les limites de l'intervalle.

FIG 1

Akkumulierte Gesamtfehler

Testtage

KI

$t_0$

EP 1 141 734 B1

FIG 2

# FIG 3

```
┌──────────────────────────────────┐
│   Anpassung eines stochastischen  │ ⌐ 301
│     Prozesses an die Meßdaten     │
└──────────────────────────────────┘
                 │
                 ▼
┌──────────────────────────────────┐
│    Simulationsläufe durchführen   │ ⌐ 302
└──────────────────────────────────┘
                 │
                 ▼
┌──────────────────────────────────┐
│      für jeden Simulationslauf     │
│  prognostizierte Meßdaten ermitteln│ ⌐ 303
└──────────────────────────────────┘
                 │
                 ▼
┌──────────────────────────────────┐
│   Vorhersage von Meßdaten liegt im │
│      Bereich der ermittelten       │ ⌐ 304
│    prognostizierten Meßdaten       │
└──────────────────────────────────┘
                 │
                 ▼
┌──────────────────────────────────┐
│  Bestimung eines Konfidenzintervalls│ ⌐ 305
└──────────────────────────────────┘
                 │
                 ▼
           (  ...Ende  ) ⌐ 306
```

## FIG 4

```
┌─────────────────────────────┐
│  Anpassung eines stochastischen  │ ⌐ 401
│    Prozesses an die Meßdaten    │
└─────────────────────────────┘
              │
              ▼
┌─────────────────────────────┐
│  Wahrscheinlichkeitswerte um den  │ ⌐ 402
│     Erwartungswert sortieren     │
└─────────────────────────────┘
              │
              ▼
┌─────────────────────────────┐
│  Vorhersage von Meßdaten innerhalb │ ⌐ 403
│   der Grenzen des Intervalls    │
└─────────────────────────────┘
              │
              ▼
         ╭──────────╮
         │   Ende   │ ⌐ 404
         ╰──────────╯
```

## FIG 5